Europäisches Patentamt

(19) **European Patent Office**

**Office européen des brevets**

(11) Publication number: **0 245 533**
**B1**

(12) **EUROPEAN PATENT SPECIFICATION**

(45) Date of publication of the patent specification:
**10.10.90**

(21) Application number: **86106650.4**

(22) Date of filing: **15.05.86**

(51) Int. Cl.⁵: **D03D 3/00, B29D 24/00,**
**B29C 67/14, D03D 25/00**

(54) Three dimensional woven fabric connector.

(43) Date of publication of application:
**19.11.87 Bulletin 87/47**

(45) Publication of the grant of the patent:
**10.10.90 Bulletin 90/41**

(84) Designated Contracting States:
**AT BE CH DE FR GB IT LI NL SE**

(56) References cited:
**DE-C- 357 353**
**GB-A- 1 099 626**
**US-A- 3 090 406**
**US-A- 3 538 957**
**US-A- 4 395 450**

**MELLIAND TEXTILBERICHTE, vol. 52, no. 1,**
**January 1971, pages 3-10; DR. HORST FREHSEN:**
**"Kohlenstoff- und Graphitfasern Herstellung,**
**Eigenschaften und Verwendung"**

(73) Proprietor: **Edo Corporation/Fiber Science Division,**
**506 Billy Mitchell Road, Salt Lake City Utah 84116(US)**

(72) Inventor: **Abildskov, Dale, 729 Northview Circle, Salt**
**Lake City Utah(US)**

(74) Representative: **Patentanwälte Grünecker, Kinkeldey,**
**Stockmair & Partner, Maximilianstrasse 58,**
**D-8000 München 22(DE)**

## Description

This invention relates to a fabric joint for providing three-dimensional structural support, to a three-dimensional woven connector formed by said joint and to the application of said joint for joining structural aircraft components.

A type of a fabric joint connector is known from applications in the aircraft industry to join structural components such as spars or ribs to wing skin coverings. Said L-shaped fabric joint connectors are bonded by adhesive to both structural components. Although creating a light-weighted joint, typical strength and efficient load transfer in only a limited number of directions is achieved, while presenting weaknesses in other directions, which, e.g. lead to peeling problems.

A joint known from US-A 4 395 450 contains a resin impregnated woven fabric connector with intersecting fabric panels which are interwoven with an intermediate laterally extending panel. The connector is used for joints of aircraft structural members. The fiber orientation is predominately transverse.

Woven fabric material for high load applications is known from US-A 3 991 249 and US-A 3 090 406 in which intersecting fabric sections use at least one common weft thread. The line of intersection between the sections of the fabric material extends perpendicular to the weaving or warp direction.

DE-C 357 353 and US-A 3 538 957 disclose three-dimensional fabric having lines of intersection between connected sections of the fabric, said lines of intersection extending in weaving or warp direction.

It is a task of the invention to create a fabric joint for providing three-dimensional structural support for at least two adjoining structural members which is useable as a connector providing strenght and efficient load transfer in a multiplicity of directions and which uniformly distributes loads and stresses between joined structural components.

This is achieved with a fabric joint according to claim 1, which can be used as a three-dimensional woven connector according to claim 12 for forming a joint according to claim 19.

With this configuration, strength and efficiency and uniform load transfer is provided in lengthwise and crosswise directions of the fiber bundles or fiber strands. Preferred embodiments are disclosed in the depending claims.

Embodiments of the invention are described in accordance with the drawings, in which:

FIG. 1 shows a fragmented, cross-sectional view of a prior art arrangement for connecting a structural support to a structural covering;

FIG. 2 is a fragmented, cross-sectional view of a three-dimensional woven connector, in the form of an H, made in accordance with the principles of the present invention;

FIG. 3 is a cross-sectional view of another embodiment of a three-dimensional woven connector, in the form of a T with two legs;

FIG. 4 is a cross-section of another embodiment of a three-dimensional woven connector in the form of a Y;

FIG. 5 is a perspective view of a schematic showing of the crosswise fibers interwoven with the lengthwise fibers of the connector embodiment of FIG. 2;

FIG. 6 is a perspective view of a schematic showing of the crosswise fibers interwoven with the lengthwise fibers of the connector embodiment of FIG. 3;

FIG. 7 is a perspective view of a schematic showing of the crosswise fibers interwoven with the lengthwise fibers of the connector embodiment of FIG. 4; and

FIG. 8 is a fragmented view showing the manner in which crosswise fibers may be interwoven with lengthwise fibers in the woven connector of the present invention.

Referring now to the drawings:

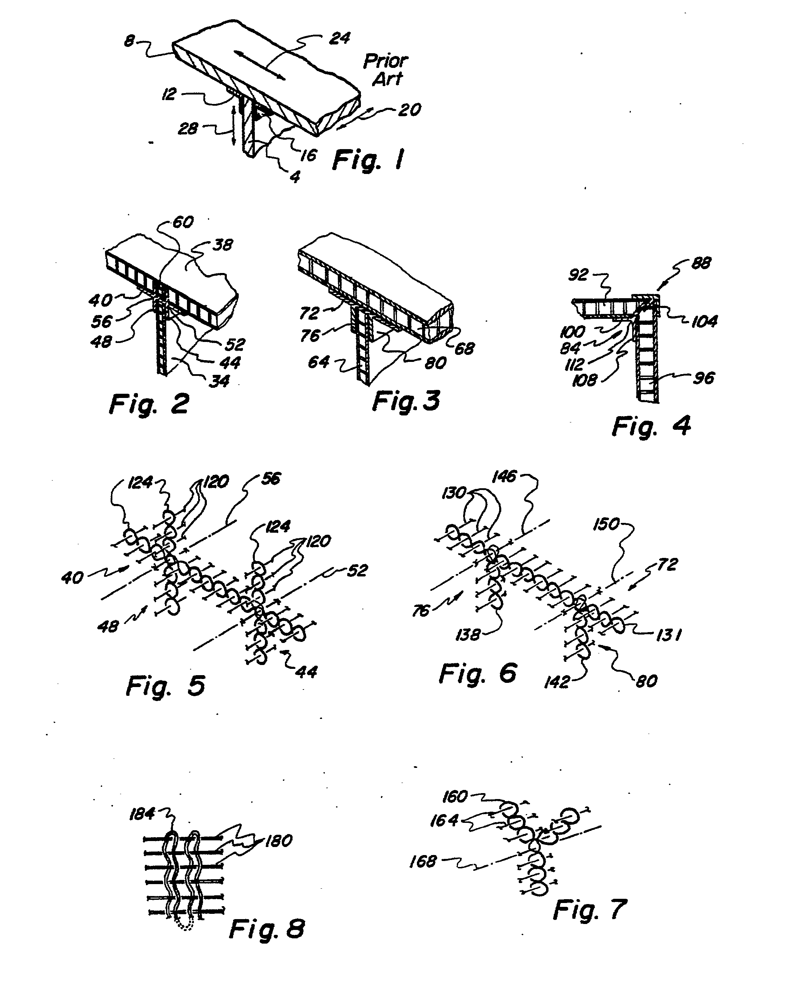

FIG. 1 shows a prior art arrangement for connecting a spar or rib 4 (such as might be used in construction of an airplane wing) to another structural component 8 (such as the skin or covering of an aircraft wing). Placed at the joint of the spar 4 and structural component 8 to hold the two together are a pair of fabric connectors 12 and 16 (shown in cross section in FIG. 1). A portion of each fabric connector 12 and 16 is placed flat against and bonded to the structural component 8 while another portion is placed flat against and bonded to the spar 4 as shown. This connector arrangement provides fairly good strength and load transfer efficiency between the spar 4 and structural component 8 when the two components are moved as indicated by arrows 20 relative to one another. However, the strength of the connector is very weak when the two components are moved in the direction indicated by arrows 24 and 28 relative to one another. In particular, such movement would give rise to well known fabric connector peel problems.

The three-dimensional woven fabric connector of the present invention avoids the problems outlined in connection with the FIG. 1 arrangement, and one embodiment of the connector is shown in fragmented, cross-sectional view in FIG. 2. This embodiment is shown connecting a spar 34 to a skin covering 38, such as used in the construction of aircraft. It is noted that both the spar 34 and skin covering 38 are shown as being made of a sandwich wall construction. It should be understood that the woven fabric connectors of the present invention may be used to connect together a variety of structural components in addition to those shown in the drawings.

The connector embodiment of FIG. 2 includes a first section of fabric 40 composed of fibers interwoven together in a cross-hatched pattern as will be described in detail later. Also included are second and third sections of fabric 44 and 48 also composed of fibers interwoven together in a cross-hatched fashion. The second and third sections of fabric 44 and 48 are also interwoven with the first section 40 along respective intersections 52 and 56 of the sections. The locus of points at which section 44 intersects section 40 and the locus of points at which section 48 intersects section 40 are spaced apart and generally parallel in the plane of section 40. As will be explained further later on, at least one fiber or fiber bundle of the section of fabric 40 is common with the section of fabric 44, and at least one other fiber or fiber bundle of section 40 is common with section 48.

As seen in FIG. 2, portions of both sections 44 and 48 extend upwardly from section 40 and portions also extend downwardly therefrom. Likewise, a portion of section 40 extends outwardly in one direction from section 44, and another portion of section 40 extends outwardly in the opposite direction from section 48, with an intermediate portion of section 40 extending between sections 44 and 48. The sections 44 and 48 are shown as intersecting section 40 at right angles, but other angles of intersection could also be used as needed. Additionally, the fabric sections are bendable and thus may be made to conform to variety of shapes to which they might be bonded.

The spar 34 and skin cover 38 are connected together by placing section 44 flat against the underside of the skin covering 38 and bonding it thereto. The two upper portions of sections 44 and 48 extend into the skin covering 38 and are bonded to the interior of the skin section covering. The edge of the spar 34 is placed between the two lowermost portions of sections 44 and 48 and is bonded therebetween. A spar section 60 is also positioned between the two upper portions of the sections 44 and 48 as shown in FIG. 2. With this configuration, structural strength and efficient load transfer is achieved in all three directions of movement which the spar 34 may have relative to the skin covering 38.

FIG. 3 is a cross-sectional view of another embodiment of the woven fabric connector of the present invention. This embodiment also is shown coupling together a spar 64 to a skin covering 68. The connector of FIG. 3 includes a first section of woven fabric 72, and second and third sections of woven fabric 76 and 80 which are interwoven with the section 72 to extend downwardly therefrom as shown. The sections of fabric 76 and 78 intersect the section of fabric 72 along generally parallel loci of points at which intersections a fiber or bundle of fibers is common with the section 72 and respective sections 76 and 80.

The connector of FIG. 3 is utilized by placing section 72 flat against the bottom surface of the skin covering 68 and bonding it thereto. The spar 64 is positioned between sections 76 and 80 and is bonded to the sections, and to the underside of section 72.

FIG. 4 shows a cross-sectional view of still another embodiment of the woven fabric connector of the present invention. Specifically, two connectors 84 and 88 are shown interconnecting, at a right angle, the edges of two skin covers 92 and 96. Each of the connectors, such as connector 84, includes three sections 100, 104 and 108, all of which extend generally radially outwardly from an intersection 112 of the three sections. The three sections are composed of fibers interwoven together, with at least one fiber or bundle of fibers being common to the three sections.

The connector 88 is similar to the connector 84 except two of the sections are bent to overlie the outside corner of the joint of the two skin coverings 92 and 96, as shown. Two of the sections of connectors 84 and 88 extend into the joint between the skin coverings 92 and 96 generally in planes parallel to one another. The different sections of the two connectors 84 and 88 are bonded to the surfaces of the skin coverings with which they are placed in contact.

FIG. 5 shows a schematic representation of the weaving of the connector embodiment of FIG. 2. The connector incudes lengthwise fibers or fiber bundles 120 which serve as the warp of the woven fabric. Interlaced through the lengthwise fibers 120 or warp are crosswise fibers or fiber bundles 124 which serve as the weft of the fabric. The crosswise fibers 124 of section 48 are interwoven about a lengthwise fiber or bundle of fibers 56 which is common and serves as an intersection with section 40. Similarly, the crosswise fibers 124 of the section 44 are interwoven with a lengthwise fiber or bundle of fibers 52 which is also common with the section 40. The common fiber or fiber bundle 52 is spaced from and generally parallel with the fiber or fiber bundle 56, as indicated in FIG. 5.

The crosswise fibers 124 are interwoven through the lengthwise fibers 120 to an edge of a section, such as section 48, and then extend about the edge and back through the lengthwise fibers 120 substantially without break. That is, the crosswise fibers 124 are looped about the edgemost lengthwise fibers without a break in the crosswise fibers. Although not indicated in the FIG. 5 embodiment, the crosswise fibers of one section may extend through the intersection with another section to form the crosswise fibers of that other section.

FIG. 6 shows schematically the interweaving of fibers of the woven fabric connector embodiment of FIG. 3. This connector also includes lengthwise fibers 130 interwoven with crosswise fibers 134, 138 and 142. The crosswise fibers 134 are shown interwoven with the lengthwise fibers 130 to form section 72 (as also shown in FIG. 3. Similarly, crosswise fibers 138 and 142 are interwoven with lengthwise fibers to form section 76 and 80 respectively. It is noted that the crosswise fibers in each of the sections do not extend into the other sections, other than extending to and about the fibers or fiber bundles 146 and 150 which are common to intersecting sections.

FIG. 7 is a schematic showing of the interweaving of the fibers for the woven fabric connector embodiment of FIG. 4. In this embodiment, crosswise fibers 160 are interwoven with lengthwise fibers 164 and extend from one section through the intersection 168 to form crosswise fibers of another section. In FIG. 7 the crosswise fibers extend from one section through the intersection 168 to a next section, and then from that section through the intersection 168 to the third section of fabric.

FIG. 8 shows a fragmented section of fabric which includes lengthwise fibers 180 interwoven with a continuous crosswise fiber 184. The crosswise fiber 184 is interwoven in one direction through the lengthwise fibers 180 and then about the edgemost lengthwise fiber and back in the other direction through the lengthwise fibers, etc. This continuous looping or weaving of the crosswise fiber forms advancing columns of weft in the fabric as generally indicated in FIG. 8.

The fabric connectors of the present invention are advantageously woven of fiber bundles of graphite, fiberglass, Kevlar, or similar high strength material.

Although different specific embodiments of the invention have been described, all such embodiments provide a three-dimensional woven fabric connector which provides a type of three-dimensional structural support. All of the embodiments include sections which are interwoven together and intersect at a common locus or loci of points. Each of these embodiments provides strength and efficient load transfer in three dimensions. The connectors, in addition to providing strong reliable connectors, are very lightweight.

It is to be understood that the above-described arrangements are only illustrative of the application of the principles of the present invention. Numerous modifications and alternative arrangements may be devised by those skilled in the art without departing from the scope of the present invention and the appended claims are intended to cover such modifications and arrangements.

## Claims

1. A fabric joint for providing three dimensional structural support for at least two adjoining structural members (34, 38; 64, 68, 92, 96) comprising
a first section (40, 72) of fabric for attachment to one of the structural members and composed of fiber bundles or fiber strands interwoven together as warp (130; 164; 180) and weft (121; 131; 160; 184), and
a second section (44, 76) of fabric for attachment to the other of the structural members and also composed of fiber bundles or fiber strands interwoven together as warp (120) and weft (124, 138), and interwoven with said first section (40, 72) along an intersection (52; 146; 168) of the two sections, with at least one fiber bundle or fiber strand of the warp, located at the intersection, being common to the two sections, and
wherein at least some of the fiber bundles or fiber strands of the weft (124, 131, 160) of the first section extend through the intersection to form at least some of the fiber bundles or fiber strands of the weft (124, 138) of the second section (44, 76).

2. A fabric joint as in claim 1 wherein the fiber bundles of the weft (124; 131, 138, 160) of each section (40, 44; 72, 76) are interwoven through the warp (120, 130, 164, 180) in one direction to an edge thereof and then about the edge and back through the warp (120, 130, 164, 180) in the opposite direction substantially without break in the fiber bundles.

3. A fabric joint as in claim 2 wherein the weft (124; 131; 138; 160) extends generally at right angles to the warp (120, 130, 164, 180).

4. A fabric joint as in claim 1 further comprising a third section (48, 80) of fabric for attachment to one of the structural members (34, 48; 64, 68) at a location spaced from that at which either the first or second section is attached and composed of fiber bundles or fiber strands interwoven with the first section (40, 72) along a second intersection (56, 150) of the first and third sections which is in general parallel with and spaced apart from the first mentioned intersection (52, 146), with at least one fiber bundle or fiber strand of the warp (120, 130) located at the second intersection (56, 150) being common to the first and third sections (40, 72; 48, 80).

5. A fabric joint as in claim 4 wherein the second and third sections (44, 76; 48, 80) each extend laterally in opposite directions from the first and second intersections (52, 56; 146, 150) respectively, and wherein the first section (40, 72) extends outwardly from the second section (44, 76) in one direction and outwardly from the third section (48, 80) in the opposite direction.

6. A fabric joint as in claim 5 wherein the second and third sections (44, 48; 76, 80) intersect the first section (40, 72) generally at a right angle.

7. A fabric joint as in claim 4 wherein the second and third sections (44, 48; 76, 80) each extend in the same direction from the first section (40, 72), and wherein the first section (40, 72) extends outwardly from the second section (44, 76) in one direction and outwardly from the third section (48, 80) in the opposite direction.

8. A fabric joint as in claim 1 wherein the second section extends outwardly in one direction from the intersection (168) which is between the side edges of the first section.

9. A fabric joint as in claim 8 which is formed with the sections generally in the shape of a Y.

10. A fabric joint as in claim 1 wherein said fiber bundles are made of graphite.

11. A fabric joint as in claim 1 wherein said fiber bundles are made of fiberglass.

12. A three dimensional woven connector comprising
a first generally planar section (40, 72) of flexible fabric composed of fibers which run lengthwise and are interwoven with fibers which run crosswise generally at right angles to the lengthwise fibers, and
a second generally planar section (44, 76) of flexible fabric composed of lengthwise and crosswise fibers interwoven generally at right angles to one another, said second section (44, 76) of fabric being interwoven with said first section of fabric along an intersection (52, 146, 168) of the two sections, where at least one lengthwise fiber is common to the two sections, and
wherein at least some of the crosswise fibers of each section (40, 72) extend from said each section through the intersection to the other section.

13. A woven connector as in claim 12 wherein at least some of the crosswise fibers (184) are interwoven with the lengthwise fibers (180) to extend in one direction to the edge of a section and then about the edge and back in the opposite direction.

14. A woven connector as in claim 12 further comprising a third generally planar section (48, 80) of flexible fabric composed of lenghtwise fibers interwoven generally at right angles to one another, said third section (48, 80) of fabric being interwoven with said first section (40, 72) of fabric along a second intersection (56, 150) of the first and third sections, where the second intersection (56, 150) is generally parallel with the first mentioned intersection (52, 146) and where at least one lengthwise fiber (120, 130) is common to the first and third sections.

15. A woven connector as in claim 14 wherein the second and third sections (44, 48) each extend laterally in opposite directions from the first and second intersections (52, 56) respectively, and wherein the first section (40) extends outwardly from the second section (44) in one direction and outwardly from the third section (48) in the opposite direction.

16. A woven connector as in claim 14 wherein the second and third sections (76, 80) each extend in the same direction from the first section (72) generally in parallel to one another, and wherein the first section (72) includes lateral portions which extend outwardly in opposite directions from the second and third sections (76, 80).

17. A woven connector as in claim 13 further comprising a third generally planar section of flexible fabric composed of lenghtwise and crosswise fibers (164, 160) interwoven generally at right angles to one another, said third section of fabric being interwoven with said first and second sections of fabric along said intersection (168) where at least one fiber (160, 164) is common to the first, second and third sections.

18. A woven connector as in claim 17 wherein said first, second and third sections extend radially outwardly from said intersection (186), each at an angle with respect to the others.

19. A joint between a sandwich skin section (38) of an aircraft component and an elongate structural spar element (34) wherein the skin section comprises a core bounded on opposite faces by inner and outer face sheets, said joint comprising a longitudinal groove extending from the underside of the skin section (38) into the core of said section, a strap-like woven fabric connector extending longitudinally along the groove and formed by a pair of second and third substantially parallel spaced web-like woven fabric sections (44, 48) intersected by a first web-like woven fabric section (40) to provide the connector with a substantially H-shaped cross-section in which the first selection (40) forms the crossbar of the H and has portions projecting transversely from opposite sides of the two spaced sections (44, 48), each of the sections comprising a plurality of multi-filament yarn strands extending side-by-side transversely to the longitudinal intersecting section or sections, the portions of the second and third spaced sections (44, 48) of the connector on one side of the first section (40) being received in the groove and adhesively bonded to the exposed edges of the core along the side walls of the groove, and the transversely projecting portions of the first section (40) overlying and being adhesively bonded to the underside of the skin section (38) on opposite sides of the groove whereby the first section (40) bridges the groove and restores the continuity of the underside of the skin section (38), a structural insert-section (60) filling the void in the groove between the portions of the second and third sections (44, 48) within the groove, and the spar element (34) having a longitudinally extending edge received between the portions of the second and third spaced sections (44, 48) on the other side of the crossing first section (40) from the groove, said section portions overlying and being adhesively bonded to the opposite faces of the spar element (34) whereby the second and third spaced sections (44, 48) form continuous load paths between the spar element and the inner and outer face sheets of the skin section (38).

20. A joint according to claim 19, in which the transversely extending yarn strands of each section are formed by a continuous multi-filament strand which is woven back and forth across this section.

**Patentansprüche**

1. Gewebeverbindung zum Herstellen einer dreidimensionalen Bauteilabstützung mit wenigstens zwei miteinander zu verbindenden Bauteilen (34, 38; 64, 68; 92, 96), gekennzeichnet durch einen ersten Abschnitt (40, 72) aus Gewebe zum Befestigen an einem der Bauteile, wobei der Abschnitt aus miteinander verwebten Fasern, Faserbündeln oder Fasersträngen besteht, die im Gewebe Kettfäden (130; 164; 180) und Schussfäden (121; 131; 160; 184) bilden, und durch einen zweiten Abschnitt (44, 76) eines Gewebes zum Befestigen an dem anderen der Bauteile, wobei der zweite Abschnitt ebenfalls aus verwebten Fasern, Faserbündeln oder Fasersträngen besteht, die im zweiten Abschnitt Kettfäden (120) und Schußfäden (124; 138) bilden und mit dem ersten Abschnitt (40, 72) entlang eines Verschneidungsbereiches (52; 146; 168) der beiden Abschnitte verwebt sind, wobei wenigstens ein Faserbündel oder ein Faserstrang der Kettfäden, das bzw. der im Verschneidungsbereich angeordnet ist, beiden Abschnitten gemeinsam ist, wobei wenigstens einige der die Schußfäden (124, 131, 160) bildenden Faserbündel oder Faserstränge des ersten Abschnittes sind durch den Verschneidungsbereich erstrecken und wenigstens einige der die Schußfäden (124, 138) des zweiten Abschnittes (44, 76) bildenden Faserbündel oder Faserstränge formen.

2. Gewebeverbinder gemäß Anspruch 1, dadurch gekennzeichnet, daß die die Schußfäden (124; 131, 138, 160) jedes Abschnittes (40, 44; 72, 76) bildenden Faserbündel in einer Richtung in die Kettfäden (120, 130, 164, 168) bis zu deren Rand eingewebt, dann um den Rand herum und erneut in die Kettfäden (120, 130, 164, 180) im wesentlichen in der entgegengesetzten Richtung ohne Bruchstellen der Faserbündel eingewebt sind.

3. Gewebeverbinder gemäß Anspruch 2, dadurch gekennzeichnet, daß sich die Schußfäden (124; 131; 138; 160) im wesentlichen unter rechten Winkeln gegenüber den Kettfäden (120; 130; 164; 180) erstrecken.

4. Gewebeverbinder gemäß Anspruch 1, weiterhin gekennzeichnet durch einen dritten Abschnitt (48, 80) aus Gewebe zum Befestigen an einem der Bauteile (34, 48; 64, 68) an einer Stelle, die von der Stelle beabstandet ist, an der entweder der erste oder der zweite Abschnitt befestigt ist, wobei der dritte Abschnitt aus Faserbündeln oder Fasersträngen besteht, die mit dem ersten Abschnitt (40, 74) entlang eines zweiten Verschneidungsbereiches (56, 150) zwischen dem ersten und dem dritten Abschnitt verwebt sind, der im wesentlichen parallel und beabstandet zum ersten Verschneidungsbereich (52, 164) ist, und daß wenigstens ein Faserbündel oder ein Faserstrang der Kettfäden (120, 130) im zweiten Verschneidungsbereich (56, 150) den ersten und dritten Abschnitten (40, 72; 48, 80) gemeinsam ist.

5. Gewebeverbinder gemäß Anspruch 4, dadurch gekennzeichnet, daß die zweiten und dritten Abschnitte (44, 76; 48, 80) sich jeweils in Querrichtung und in entgegengesetzte Richtungen von den ersten und zweiten Verschneidungsbereichen (52, 56; 146, 150) wegerstrecken, und daß sich der erste Abschnitt (40, 72) in einer Richtung vom zweiten Abschnitt (44, 76) weg und auch von dem dritten Abschnitt (48, 80) in der entgegengesetzten Richtung nach außen erstreckt.

6. Gewebeverbinder nach Anspruch 5, dadurch gekennzeichnet, daß die zweiten und dritten Abschnitte (44, 48; 76, 80) den ersten Abschnitt (40, 72) im wesentlichen unter einem rechten Winkel schneiden.

7. Gewebeverbinder nach Anspruch 4, dadurch gekennzeichnet, daß sich die zweiten und dritten Abschnitte (44, 48; 76, 80) jeweils in der gleichen Richtung vom ersten Abschnitt (40, 72) wegerstrecken, und daß der erste Abschnitt (40, 72) sich vom zweiten Abschnitt (44, 76) in einer Richtung nach außen und von dem dritten Abschnitt (48, 80) in der entgegengesetzten Richtung nach außen nach erstreckt.

8. Gewebeverbinder nach Anspruch 1, dadurch gekennzeichnet, daß der zweite Abschnitt sich in einer Richtung vom Verschneidungsbereich (168) nach außen erstreckt, der zwischen den Seitenrändern des ersten Abschnittes liegt.

9. Gewebeverbinder nach Anspruch 8, dadurch gekennzeichnet, daß er mit den Abschnitten im wesentlichen die Form eines Y bildet.

10. Gewebeverbinder nach Anspruch 1, dadurch gekennzeichnet, daß die Faserbündel aus Graphit bestehen.

11. Gewebeverbinder nach Anspruch 1, dadurch gekennzeichnet, daß die Faserbündel aus Fiberglas bestehen.

12. Dreidimensionaler gewebter Verbinder, gekennzeichnet durch
einen ersten im wesentlichen ebenen Abschnitt (40, 72) aus flexiblem Gewebe, bestehend aus Fasern, die in Längsrichtung verlaufen und mit in Querrichtung und annähernd unter rechten Winkeln zu den längsverlaufenden Fasern laufenden Fasern verwebt sind, und
durch einen zweiten im wesentlichen ebenen Abschnitt (44, 76) aus einem flexiblem Gewebe, bestehend aus längsverlaufenden und querverlaufenden und im wesentlichen unter rechten Winkeln miteinander verwebten Fasern, wobei der zweite Abschnitt (44, 76) des Gewebes mit dem ersten Abschnitt des Gewebes entlang eines Verschneidungsbereiches (52, 146, 168) der beiden Abschnitte verwebt ist, so daß wenigstens eine längsverlaufende Faser den beiden Abschnitten gemeinsam ist, und
wobei wenigstens einige der querverlaufenden Fasern jedes Abschnittes (40, 72) sich von dem einen Abschnitt durch den Verschneidungsbereich in den anderen Abschnitt erstrecken.

13. Gewebter Verbinder nach Anspruch 12, dadurch gekennzeichnet, daß wenigstens eine der querverlaufenden Fasern (184) mit den längsverlaufenden Fasern (180) verwebt ist und sich in einer Richtung zum Rand eines Abschnittes, um den Rand herum und in der entgegengesetzten Richtung zurückerstreckt.

14. Gewebter Verbinder gemäß Anspruch 12, weiterhin gekennzeichnet durch einen dritten im wesentlichen ebenen Abschnitt (48, 80) aus flexiblem Gewebe, bestehend aus unter im wesentlichen rechten Winkeln miteinander verwebten längsverlaufenden und querverlaufenden Fasern, wobei der dritte Abschnitt (48, 80) des Gewebes mit dem ersten Abschnitt (40, 72) des Gewebes entlang eines zweiten Verschneidungsbereiches (56, 150) der ersten und dritten Abschnitte verwebt ist, so daß der zweite Verschneidungsbereich (56, 150) im wesentlichen parallel und beabstandet zum ersten Verschneidungsbereich (52, 146) liegt und wenigstens eine längsverlaufende Faser (120, 130) den ersten und dritten Abschnitten gemeinsam ist.

15. Gewebter Verbinder nach Anspruch 14, dadurch gekennzeichnet, daß sich die ersten und dritten Abschnitte (44, 48) jeweils quer und in zueinander entgegengesetzten Richtungen von den ersten und zweiten Verschneidungsbereichen (52, 56) wegerstrecken, und daß der erste Abschnitt (40) sich vom zweiten Abschnitt (44) in einer Richtung nach außen und in entgegengesetzter Richtung vom dritten Abschnitt (48) wegerstreckt.

16. Gewebter Verbinder gemäß Anspruch 14, dadurch gekennzeichnet, daß die zweiten und dritten Abschnitte (46, 80) sich jeweils in der gleichen Richtung vom ersten Abschnitt (72) und im wesentlichen zueinander parallel erstrecken, und daß der erste Abschnitt (72) querverlaufende Teile besitzt, die sich in voneinander entgegengesetzten Richtungen von den zweiten und dritten Abschnitten (76, 80) nach außen erstrecken.

17. Gewebter Verbinder gemäß Anspruch 12, weiterhin gekennzeichnet durch einen dritten im wesentlichen ebenen Abschnitt aus flexiblem Gewebe, bestehend aus unter im wesentlichen rechten Winkeln miteinander verwebten längslaufenden und querlaufenden Fasern (164, 160), wobei der dritte Gewebeabschnitt mit den ersten und zweiten Abschnitten des Gewebes entlang des Verschneidungsbereiches (168) verwebt ist, derart, daß wenigstens eine Faser (160, 164) den ersten, zweiten und dritten Abschnitten gemeinsam ist.

18. Gewebter Verbinder gemäß Anspruch 17, dadurch gekennzeichnet, daß sich die ersten, zweiten und dritten Abschnitte vom Verschneidungsbereich (168) jeweils unter einem Winkel relativ zum anderen Abschnitt radial nach außen erstrecken.

19. Verbindungsstelle zwischen einem Sandwich-Außenhaut-Abschnitt (38) eines Flugzeug-Bauteils und einem langgestreckten Sparrenelement (34), wobei der Außenhautabschnitt einen Kern besitzt, der an gegenüberliegenden Seiten durch innere und äußere Abdeckschichten begrenzt ist, dadurch gekennzeichnet,
daß sich von der Unterseite des Außenhautabschnittes (38) in den Kern des Abschnittes eine längsverlaufende Nut erstreckt,
daß sich entlang der Nut ein bandförmiger gewebter Gewebeverbinder erstreckt, der ein Paar zweiter und dritter, im wesentlichen paralleler und beabstandeter, bahnähnlicher gewebter Gewebeabschnitte (44, 48) aufweist, die in ihrem Verlauf einen ersten, bahnähnlichen gewebten Gewebeabschnitt (40) schneiden, so daß der Verbinder einen im wesentlichen H-förmigen Querschnitt aufweist, in welchem der erste Abschnitt (40) den Quersteg des H bildet und der Teile hat, die von gegenüberliegenden Seiten der beiden beabstandeten Abschnitte (44, 48) in Querrichtung abstehen, wobei jeder Abschnitt aus einer Vielzahl von Multifilament-Garnsträngen besteht, die sich nebeneinanderliegend und quer zu den längsverlaufenden, einander schneidenden Abschnitten erstrecken, und wobei die Teile der zweiten und der dritten beabstandeten Abschnitte (44, 48) des Verbinders, die an einer Seite des ersten Abschnittes (40) vorliegen, in der Nut aufgenommen und an die freiliegenden Ränder des Kerns entlang der Seitenwände der Nut durch Kleben angehaftet sind,
daß die in Querrichtung abstehenden Teile des ersten Abschnitts (40) die Unterseite des Außenhautabschnittes (38) an den sich gegenüberliegenden Seiten der Nut überlappen und daran durch Kleben angehaftet sind, so daß der erste Abschnitt (40) die Nut überbrückt und einen durchgehenden Übergang entlang der Unterseite des Außenhautabschnittes (38) herstellt,
daß ein Bauteil-Einsatzabschnitt (60) den Hohlraum der Nut zwischen den Teilen der zweiten und dritten Abschnitte (44, 48) ausfüllt,
und daß das Sparrenelement (34) einen sich in Längsrichtung erstreckenden Rand aufweist, der zwischen den Teilen der zweiten und dritten beabstandeten Abschnitte (44, 48) an der anderen Seite des querverlaufenden ersten Abschnittes (40) der Nut aufgenommen ist, wobei die Teile der Abschnitte die gegenüberliegenden Flächen des Sparrenelementes überlappen und daran durch Kleben angehaftet sind, so daß die zweiten und dritten beabstandeten Abschnitte (44, 48) durchgehende Lastübertragungswege zwischen dem Sparrenelement und den inneren und den äußeren Abdeckschichten des Außenhautabschnitts (38) formen.

20. Verbindungsstelle gemäß Anspruch 19, dadurch gekennzeichnet, daß die sich in Querrichtung erstreckenden Garnstränge jedes Abschnittes durch einen kontinuierlichen Multifilament-Garnstrang gebildet werden, der in Querrichtung über den Abschnitt hin- und herlaufend eingewebt ist.

**Revendications**

1. Joint de tissu pour procurer un support structural tridimensionnel pour su moins deux éléments structuraux adjacents (34, 38; 64, 68; 92, 96) comprenant:
une première section (40, 72) de tissu pour se fixer sur l'un des éléments structuraux et constituée de faisceaux de fibres ou de filaments de fibres entrelacés ensemble pour former une chaîne (130; 164; l80) et une trame (121; 131; 160; 184) et
une deuxième section (44, 76) de tissu pour se fixer sur l'autre élément structural, et également constituée de faisceaux de fibres ou de filaments de fibres entrelacés ensemble pour constituer une chaîne (120) et une trame (124, 138), et entrelacés avec cette première section (40, 72) le long d'une intersection (52; 146; 168) des deux sections, l'un au moins des faisceaux de fibres ou du filament de fibres de la chaîne, situé à l'intersection, étant commun aux deux sections, et
dans lequel certains au moins des faisceaux de fibres ou des filaments de fibres de la trame (124, 131, 160) de la première section s'étendent à travers l'intersection pour former au moins certains des faisceaux de fibres ou des filaments de fibres de la trame (124, 138) de la deuxième section (44, 76).

2. Joint de tissu selon la revendication 1, dans lequel les faisceaux de fibres de la trame (124;131, 138, 160) de chaque section (40, 44; 72, 76) sont entrelacés à travers la chaîne (120, 130, 164, l80) dans une direction jusqu'à un bord de cette section et ensuite autour du bord pour revenir à travers la chaîne (120, 130, 164, 180) dans la direction opposée pratiquement sans aucune rupture dans les faisceaux de fibres.

3. Joint de tissu selon la revendication 2, dans lequel la trame (124; 131; 138; 160) s'étend de façon générale perpendiculairement à la chaîne (120, 130, 164, 180).

4. Joint de tissu selon la revendication 1, comprenant en outre une troisième section (48, 80) de tissu pour se fixer sur l'un des éléments structuraux (34, 48; 64, 68) à un emplacement espacé de l'emplacement auquel, soit la première, soit la deuxième section, est fixée, et constituée de faisceaux ou de filaments de fibres entrelacés avec la première section (40, 72) le long d'une deuxième intersection (56, 150) de la première et de la troisième section, laquelle intersection est en général parallèle à la première intersection mentionnée (52, 146) et espacée de cette dernière, au moins un faisceau ou un filament de fibres de la chaîne (120, 130) situé au niveau de la deuxième intersection (56, 150) étant commun à la première et à la troisième section (40, 72; 48, 80).

5. Joint de tissu selon la revendication 4, dans lequel chacune de la deuxième et de la troisième section (44, 76; 48, 80) s'étend latéralement dans des directions opposées de la première et de la deuxième intersection respectivement (52, 56; 146, 150), et dans lequel la première section (40, 72) s'étend vers l'extérieur depuis la deuxième section (44, 76) dans une première direction et vers l'extérieur depuis la troisième section (48, 80) dans la direction opposée.

6. Joint de tissu selon la revendication 5, dans lequel la deuxième et la troisième section (44, 48; 76, 80) coupent la première section (40, 72) généralement à angle droit.

7. Joint de tissu selon la revendication 4, dans lequel chacune de la deuxième et de la troisième section (44, 48; 76, 80) s'étend dans la même direction depuis la première section (40, 72) et dans lequel la première section (40, 72) s'étend vers l'extérieur depuis la deuxième section (44, 76) dans une première direction et vers l'extérieur depuis la troisième section (48, 80) dans la direction opposée.

8. Joint de tissu selon la revendication 1, dans lequel la deuxième section s'étend vers l'extérieur dans une première direction depuis l'intersection (168) entre les bords latéraux de la première section.

9. Joint de tissu selon la revendication 8, qui est formé avec les sections généralement sous la forme d'un Y.

10. Joint de tissu selon la revendication 1, dans lequel les faisceaux de fibres sont en graphite.

11. Joint de tissu selon la revendication 1, dans lequel les faisceaux de fibres sont en fibres de verre.

12. Jonction tissée tridimensionnelle comprenant: une première section généralement plane (40, 72) de tissu flexible constitué de fibres orientées longitudinalement et entrelacées avec des fibres orientées transversalement, généralement perpendiculairement aux fibres longitudinales, et une deuxième section généralement plane (44, 76) de tissu flexible constitué de fibres longitudinales et transversales entrelacées généralement à angle droit les unes par rapport aux autres, cette deuxième section (44, 76) de tissu étant entrelacée avec la première section de tissu le long d'une intersection (52, 146, 168) des deux sections, au moins une fibre longitudinale étant commune aux deux sections, et dans laquelle certaines au moins des fibres transversales de chaque section (40, 72) s'étendent depuis ladite section à travers l'intersection jusqu'à l'autre section.

13. Jonction tissée selon la revendication 12, dans laquelle certaines au moins des fibres transversales (184) sont entrelacées avec des fibres longitudinales (180) pour s'étendre dans une direction jusqu'au bord d'une section, et ensuite autour de ce bord, pour revenir dans la direction opposée.

14. Jonction tissée selon la revendication 12, comprenant en outre une troisième section généralement plane (48, 80) de tissu flexible constitué de fibres longitudinales et transversales entrelacées généralement à angle droit les unes par rapport aux autres, cette troisième section (48, 80) de tissu étant entrelacée avec la première section (40, 72) de tissu le long d'une deuxième intersection (56, 150) de la première et de la troisième section, la deuxième intersection (56, 150) étant généralement parallèle à l'intersection mentionnée en premier (52, 146) et au moins une fibre longitudinale (120, 130) étant commune à la première et à la troisième section.

15. Jonction tissée selon la revendication 14, dans laquelle la deuxième et la troisième section (44, 48) s'étendent chacune latéralement dans des directions opposées depuis la première et la deuxième intersection respectivement (52, 56), et dans laquelle la première section (40) s'étend vers l'extérieur depuis la deuxième section (44) dans une direction et vers l'extérieur de la troisième section (48) dans la direction opposée.

16. Jonction tissée selon la revendication 14, dans laquelle la deuxième et la troisième section (76, 80) s'étendent chacune dans la même direction depuis la première section (72) généralement parallèlement l'une à l'autre, et dans laquelle la première section (72) comporte des portions latérales qui s'étendent vers l'extérieur dans des directions opposées depuis la deuxième et la troisième section (76, 80).

17. Jonction tissée selon la revendication 13, comprenant en outre une troisième section généralement plane de tissu flexible constituée de fibres longitudinales et transversales (164, 160) entrelacées généralement à angle droit les unes par rapport aux autres, cette troisième section de tissu étant entrelacée avec la première et la deuxième section de tissu le long de l'intersection (168) où au moins une fibre (160, 164) est commune à la première, à la deuxième et à la troisième section.

18. Jonction tissée selon la revendication 17, dans laquelle la première, la deuxième et la troisième section s'étendent radialement vers l'extérieur depuis l'intersection (186), chacune en faisant un angle avec les autres.

19. Joint entre une section de revêtement sandwich (38) d'un composant d'aéronef et un élément de longeron structural allongé (34), dans lequel la section de revêtement comporte une âme collée sur ses faces opposées à des feuilles surfaciques intérieure et extérieure, ce joint comprenant: une rainure longitudinale s'étendant depuis le côté inférieur de la section de revêtement (38) dans l'âme de cette section, un joint en tissu analogue à une sangle s'étendant longitudinalement le long de la rainure et formé par une deuxième et une troisième section de tissu analogue à une bande sensiblement parallèles et espacées l'une de l'autre (44, 48) coupées par une première section de tissu analogue à une bande (40) pour constituer la jonction avec une section transversale en forme de H, dans laquelle la première section (40) forme la barre transversale du H et a des portions se projetant transversalement depuis des côtés opposés des deux sections espacées (44, 48), chacune des sections comprenant une multiplicité de fils multifilaments s'étendant côte à côte transversalement à la section ou aux sections longitudinales qui la coupent, les portions des deuxième et troisième sections espacées (44, 48) de la jonction sur un côté de la première section (40) étant logées dans la rainure et collées sur les bords exposés de l'âme le long des parois latérales de la rainure, et les portions se projetant transversalement de la première section (40) recouvrant le côté inférieur de la section de revêtement (38) et y étant collées sur les côtés opposés de la rainure, d'où il résulte que la première section (40) recouvre la rainure et rétablit la continuité du côté inférieur de la section de revêtement (38),

une section rapportée structurale (60) remplissant le vide dans la rainure entre les portions des deuxième et troisième sections (44, 48) logées dans cette rainure,

et l'élément de longeron (30) ayant un bord longitudinal logé entre les portions des deuxième et troisième sections espacées (44, 48) sur l'autre côté de la première section (40) partant de cette rainure, ces portions de sections recouvrant les faces opposées de l'élément de longeron (34) et y étant collées, d'où il résulte que les deuxième et troisième sections espacées (44, 48) forment des trajets de charge continus entre l'élément de longeron et les revêtements surfaciques intérieur et extérieur des sections de revêtement (38).

20. Joint selon la revendication 19, dans lequel les filaments s'étendant transversalement de chaque section sont formés par un fil multifilament continu qui est tissé dans les deux directions en travers de cette section.

Fig. 1

Prior Art

Fig. 2

Fig. 3

Fig. 4

Fig. 5

Fig. 6

Fig. 8

Fig. 7